# EUROPÄISCHE PATENTSCHRIFT

(11) **EP 0 337 115 B1**
(45) Veröffentlichungstag und Bekanntmachung des Hinweises auf die Patenterteilung: **11.05.1994**
(21) Anmeldenummer: 89104153.5
(22) Anmeldetag: 09.03.1989
(51) Int. Cl.: E04B 1/19, H01R 25/14, H02G 3/20

(54) **Leuchtenträger-Anordnung**
Lighting support arrangement
Structure de support d'éclairage

(30) Priorität: 11.04.1988 DE 3812012
(43) Veröffentlichungstag der Anmeldung: 18.10.1989
(73) Patentinhaber: ERCO Leuchten GmbH, D-58507 Lüdenscheid (DE)
(72) Erfinder: Fleetwood, Roy, Cowley Road Cambridge CB4 4WS (GB)
(74) Vertreter: Ostriga, Harald

(56) Entgegenhaltungen:
- DE-A- 1 927 728
- DE-A- 2 457 380
- DE-A- 2 915 502
- DE-A- 3 620 619
- US-A- 2 929 473

## Beschreibung

Die Erfindung betrifft eine Leuchtenträger-Anordnung, die entsprechend dem Oberbegriff des Patentanspruchs 1 durch die US-A-2 929 473 bekanntgeworden ist.

Beim Trägermodul gemäß der US-A-2 929 473, welches für die Halterung von Leuchten an sich nicht vorgesehen ist, wird es als nachteilig empfunden, daß die Druckstäbe lediglich über eine reine Druckabstützung ohne weitere Befestigungsmittel an den Kupplungsstücken gehalten sind (s. US-A-2 929 473 Fig. 1, 3, 4, Pos. 11,13 in Verbindung mit Spalte 3, Zeilen 40-50, Zeilen 66-75; Spalte 4, Zeilen 1-6, Spalte 5, Zeilen 11-16, Zeilen 36-42).

Derartige lediglich druckfeste Verbindungen sind für eine verborgene elektrische Leuchten-Einspeisung im Zusammenhang mit einer Leuchtenträger-Anordnung schon aus Sicherheitsgründen wegen fehlender Kabel-Zugentlastung ungeeignet.

Zudem lösen sich die durch die US-A-2 929 473 bekannten Druckstäbe aus ihrer lediglich druckfesten Lage an den Kupplungsstücken für den Fall, daß z.B. bei Umbau- und bei Transportarbeiten die Zugverbindungen zeitweilig entspannt werden müssen.

Auch ist entsprechend der US-A-2 929 473 eine Regulierung der Vorspannung eines Moduls ausschließlich durch Anspannung der Zugverbindungen (vgl. Spalte 4, Zeilen 63-65, Spalte 5, Zeilen 43-48) gegeben. Eine Vorspannungsänderung ist daher bei der bekannten Anordnung gemäß der US-A-2 929 473, selbst wenn eine Reduzierung auf vier Druckstäbe pro Modul vorgenommen würden, sehr umständlich.

Zudem gestattet das Trägermodul gemäß der US-A-2 929 473 nur feste Längen bezüglich der dort vorgesehenen Spreize, die regelmäßig die Länge eines Druckstabes aufweisen soll (vgl. Spalte 3, Zeilen 51-59).

Von der DE-A-3 620 619 ist eine Leuchtenträger-Anordnung bekannt, die aus einzelnen als Biegestäbe ausgebildeten, im wesentlichen in einer Horizontalebene angeordneten Fachwerkstäben zusammengesetzt ist. Da jeder Knotenpunkt der von der DE-A-3 620 619 bekannten Träger-Anordnung durch eine Vertikalstütze abgetragen ist, ergeben sich zwangsläufig feste Raumunterteilungen, welche in mancherlei Hinsicht störend wirken können.

Ausgehend von der Leuchtenträger-Anordnung der eingangs beschriebenen Gattung (US-A-2 929 473), liegt der Erfindung die Aufgabe zugrunde, die bekannte Anordnung so umzugestalten, daß sie für eine Leuchtenträger-Anordnung hoher Tragfähigkeit geeignet ist und dabei die Möglichkeit schafft, größere Spannweiten - insbesondere im Hinblick auf eine ungehinderte Ausleuchtung - frei zu überbrücken.

Diese Aufgabe wird erfindungsgemäß dadurch gelöst, daß jedes Modul vier gleichlange Hohlprofilstäbe aufweist, die ein Quadrat mit je einem Kupplungsstück an jeder Quadratecke darstellen, daß die Hohlprofilstäbe mit ihren Enden in Befestigungsaufnahmen von starren Kupplungsstücken gehaltene Druckstäbe bilden, daß die Spreize mittels einer Schraubbetätigung zur Vorspannungsänderung des Moduls längenveränderbar ist, daß jedes Kupplungsstück als topfförmiger Hohlkörper ausgebildet ist und an seiner einbaubedingt vertikalen Seitenwand zwei Befestigungsaufnahmen zur endseitigen Befestigung zweier benachbarter Hohlprofilstäbe, außerdem zusätzliche Befestigungsaufnahmen zur Anbindung an ein Nachbarmodul sowie Zugmittel-Befestigungsaufnahmen aufweist und daß die kupplungsstückseitigen Befestigungsaufnahmen für die Hohlprofilstäbe jeweils einen eine Kabeldurchführung umschließenden Außengewindeansatz bilden, welcher sich im Eingriff mit einer hohlprofilseitig gehaltenen Überwurfmutter befindet.

Im Unterschied zur Leuchtenträger-Anordnung gemäß der US-A-2 929 473 bildet der Erfindungsgegenstand nicht nur kraft- bzw. druckschlüssige, sondern vielmehr formschlüssige Verbindungen zwischen den Kupplungstücken und den Hohlprofilstäben.

Zugleich dienen die in eigenartiger Weise Überwurfmuttern aufweisenden, im Sinne einer größeren Tragfähigkeit festen Verbindungen als zugentlastete sichere Kabeldurchführungen zur elektrischen Leuchteneinspeisung.

Zudem benötigt die Erfindung nur vier Hohlprofilstäbe pro Modul, welche sich besonders einfach und gleichmäßig durch eine mittels Gewinde axial längenverstellbare Spreize entspannen und vorspannen lassen.

Auch bei weitestgehender Entspannung (beispielsweise zu Transport- und Umbauzwecken) verlieren Kupplungsstücke und Hohlprofilstäbe dank der erfindungsgemäßen formschlüssigen Kupplung nicht ihren Zusammenhalt.

Die vier gleichlangen Hohlprofilstäbe des erfindungsgemäßen Leuchtenträger-Moduls stellen ein Quadrat mit je einem Kupplungsstück an jeder Quadratecke dar und bilden gemeinsam mit zwei einander rechtwinklig kreuzenden Zugmittelpaaren die Kanten eines regelmäßigen Oktaeders. Mit derartigen Leuchtenträger-Modulen lassen sich auf der Basis von Einzelquadraten und von untereinander weitestgehend gleichen Einzelbauteilen größere Quadrat- oder Rechteckraster aufbauen. Die erfindungsgemäße Ausgestaltung ermöglicht nicht nur gleichlange Hohlprofilstäbe sondern außerdem identisch ausgebildete Kupplungsstücke, Spreizen und Zugmittel. Als besonders zweckmäßig hat sich übrigens eine Ausführungsform herausgestellt, bei welcher die Zugmittel aus einer endseitig der Spreize gehaltenen Zugstäben bestehen.

Die Leuchtenträger-Module bzw. die zu einer größeren Rastereinheit zusammengefügten Leuchtenträger-Module können mittels ihrer Kupplungsstücke auf an sich beliebig ausgestaltete Tragsäulen aufgeständert oder aber an Tragseilen oder Pendelrohren abgehängt werden. In jedem Falle gestattet die Erfindung eine Überbrückung sehr großer Spannweiten.

Zur Erzielung großer Spannweiten dient insbesondere auch die erfindungsgemäße Ausgestaltung, wonach zur Herstellung eines Gesamtrasters durch Verbindung mehrerer miteinander in einer Geraden fluchtender Modulecken ein zusätzliches Zugmittelpaar - Hauptzugmittelpaar - vorgesehen ist, dessen beide Hauptzugmittel sich einbaubedingt in einer Vertikalebene befinden und jeweils oberhalb bzw. unterhalb der modulseitigen Zugmittel am oberen bzw. am unteren Ende einer jeden Spreize befestigt sind.

Weitere Erfindungsmerkmale ergeben sich aus zusätzlichen Unteransprüchen.

In den Zeichnungen sind bevorzugte Ausführungsbeispiele entsprechend der Erfindung näher dargestellt. Hierbei zeigen:
Fig. 1 eine perspektivische Teildarstellung etwa entsprechend dem mit I bezeichneten Ansichtspfeil in Fig. 2,
Fig. 2 eine auf Tragsäulen aufgeständerte aus mehreren Modulen bestehende Deckenrasteranordnung,
Fig. 3 die Deckenrasteranordnung gemäß Fig. 2, jedoch mit einer angedeuteten Tragseilabhängung,
Fig. 4 eine Draufsicht auf die Anordnung gemäß dem mi IV bezeichneten Ansichtspfeil in Fig. 2,
Fig. 5 eine Seitenansicht gemäß dem in Fig. 2 mit V bezeichneten Ansichtspfeil,
Fig. 6 eine Seitenansicht eines in horizontaler Lage befindlichen Kupplungsstückes mit an diesem befestigten Hohlprofil-Endbereichen,
Fig. 7 einen vertikalen Längsschnitt durch die in Fig. 6 gezeigte Anordnung,
Fig. 8 einen Horizontalschnitt entsprechend der Schnittlinie VIII-VIII in Fig. 6,
Fig. 9 eine teilweise geschnittene in Höhenrichtung unterbrochene Teildarstellung einer Spreize mit angeschlossenen Zugmittelstäben, etwa entsprechend dem in Fig. 1 eingekreisten und mit IX gekennzeichneten Detail,
Fig. 10 einen axialen Vertikalschnitt durch eine Tragsäule mit auf dieser befestigtem eckseitigem Kupplungsstück, etwa entsprechend der in Fig. 1 mit X-X bezeichneten Schnittlinie,
Fig. 11 einen Querschnitt durch einen längsgeschlitzten Hohlprofilstab mit in dessen Aufnahmeraum angeordneter Stromschiene und
Fig. 12 den Hohlprofilstab gemäß Fig. 11, jedoch mit einer in dessen Aufnahmeraum angeordneten Leuchtstoffröhrenlampe.

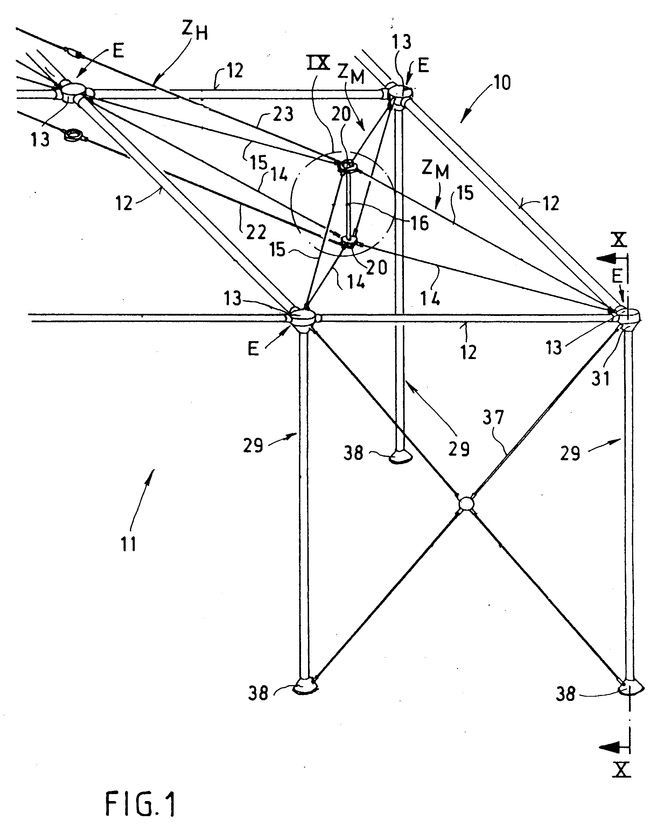

In Fig. 1 ist ein Leuchtenträger-Modul (im folgenden kurz: Modul) mit 10 bezeichnet.

Das Modul 10 bildet Bestandteil einer größeren Rasteranordnung 3 x 3, welcher im folgenden als Deckenraster 11 bezeichnet ist.

Das Modul 10 weist vier gleichlange Hohlprofilstäbe 12 aus Leichtmetallstrangguß auf, die ein Quadrat mit je einem Kupplungsstück 13 an jeder Quadratecke E darstellen. Die Kupplungsstücke 13 können aus Leichtmetallguß, z.B. aus Leichtmetalldruckguß, bestehen.

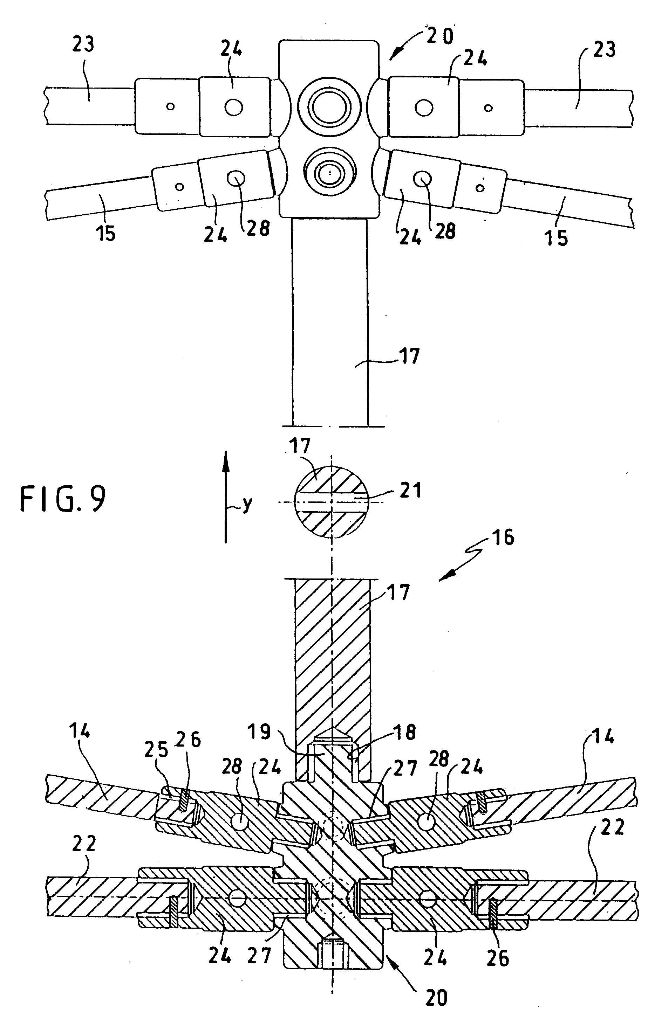

Die Hohlprofilstäbe 12 bilden gemeinsam mit zwei einander rechtwinklig kreuzenden Zugmittelpaaren Z_{M} die Kanten eines regelmäßigen Oktaeders. Jedes Zugmittelpaar Z_{M} weist untere Zugstäbe 14 und obere Zugstäbe 15 auf, die rohrformig oder massiv sind und z.B. aus nichtrostendem Stahl bestehen können. Die unteren und oberen Zugstäbe 14, 15 eines jeden Zugmittelpaares Z_{M} werden mittels einer Spreize 16 verspannt und voneinander distanziert, wie kurz anhand Fig. 9 beschrieben werden soll:

Wie im Zusammenhang der Fig. 1 und 9 zu ersehen, durchsetzt die Spreize 16 und eine zwischen den vier Hohlprofilstäben 12 aufgespannte horizontale Ebene orthogonal. Die Spreize 16 weist einen Stab 17 auf, welcher jeweils endseitig mit einer Innengewindeaufnahme 18 versehen ist, in welche ein Gewindezapfen 19 einer Zugmittelkupplung 20 eingreift.

Der Drehsinn der Gewindeanordnungen an den oberen und unteren Zugmittelkupplungen 20 ist unterschiedlich. Beispielsweise weist die obere Zugmittelkupplung 20 Rechtsgewinde und die untere Zugmittelkupplung 20 Linksgewinde auf. Auf diese Weise lassen sich die beiden Zugmittelkupplungen 20 beiderseits entlang der mit y bezeichneten Höhenachse voneinander distanzieren. Dieses hat zur Folge, daß auf die Zugstäbe 14, 15 ein Zug ausgeübt wird, welcher, mittels der Kupplungsstücke 13 übertragen, ein Zusammendrücken der Hohlprofilstäbe 12 zwischen den Kupplungsstücken 13 bewirkt. Die Hohlprofilstäbe 12 bilden mithin Druckstäbe. Auf diese Weise kann jedes Modul 10 mittels der längenveränderbaren Spreize 16 oder durch Längenveränderung der Zugstäbe 14, 15 selbst (z.B. auch mit in diesen vorgesehenen Spannschlössern insgesamt vorgespannt und so mit einer größeren Tragfähigkeit bei gleichzeitigem Vorteil erzielbarer großer Spannweiten und geringem Gewicht versehen werden.

Zur Schraubbetätigung der Spreize 16 weist deren Stab 17 ein radiales Versteckloch 21 auf, in welches ein stabförmiges Werkzeug eingreifen kann.

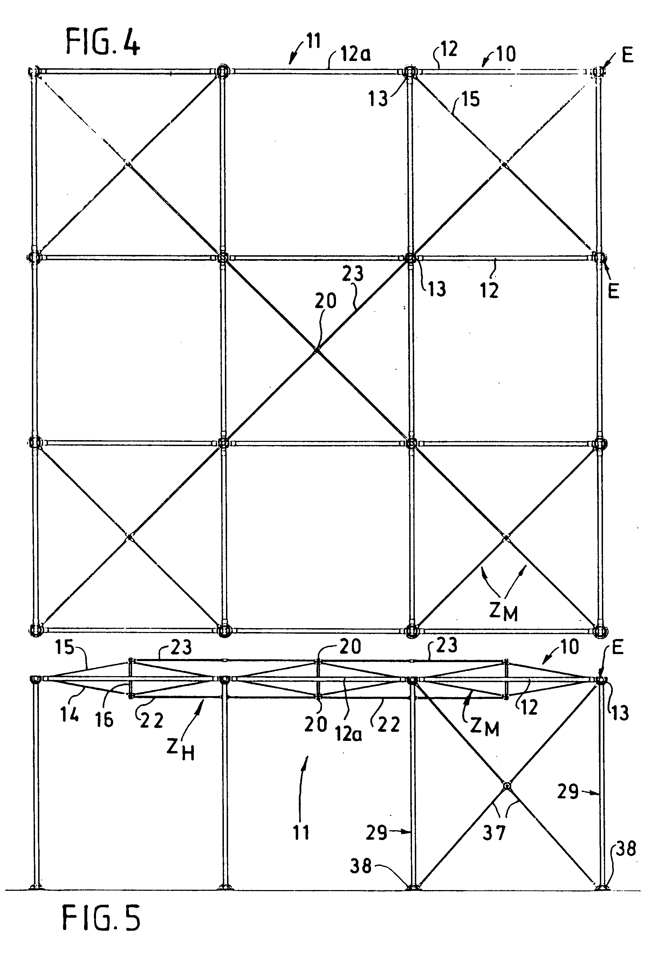

Im Zusammenhang der Fig. 1-5 sowie 9 ist auch ersichtlich, daß mehrere ein Gesamtraster (Deckenraster 11) bildende Module 10 eckseitig aneinander befestigt sind, derart, daß die Eckverbindung zwischen jeweils zwei benachbarten Modulen ein gemeinsames Kupplungsstück 13 ist. Die sich zwischen einzelnen Modulen ergebenden Lücken können mit zusätzlichen Hohlprofilstäben 12a geschlossen werden.

Im Zusammenhang der Fig. 1-5 sowie 9 wird auch deutlich, daß zur Herstellung eines Gesamtrasters (Deckenraster 11) durch Verbindung mehrerer miteinander in einer Geraden fluchtender Modulecken E ein zusätzliches Zugmittelpaar, das Hauptzugmittelpaar Z_{H}, vorgesehen ist. Die beiden Hauptzugstäbe 22 (unteres Zugmittel) und 23 (oberes Zugmittel) des Hauptzugmittelpaares befinden sich einbaubedingt in einer Vertikalebene und sind jeweils oberhalb und unterhalb der modulseitigen Zugmittel 15, 14 am oberen bzw. am unteren Ende der jeweiligen Zugmittelkupplung 20 an einer jeden Spreize 16 befestigt.

Aus Fig. 9 ist zu ersehen, daß alle dort gezeigten Zugmittel 14, 15; 22, 23 massive Stäbe bilden, welche an endseitigen Anschlagteilen 24 zugfest befestigt sind. Dieses geschieht jeweils mittels einer Gewindeanordnung 25, welche über eine Stiftschraube 26 gegen unbeabsichtigtes Losschrauben gesichert ist. Jedem Stab 14, 15; 22, 23 ist zu seiner endseitigen Gewindebefestigung bei 27 an der Zugmittelkupplung 20 ein Gewinde unterschiedlichen Drehsinns zugeordnet, so daß mittels einer Drehbetätigung der Zugstäbe 14, 15; 22, 23 über die Verstecklöcher 28 der Anschlagseile eine erhöhte Zugspannung in die Stäbe 14, 15; 22, 23 eingeleitet werden kann.

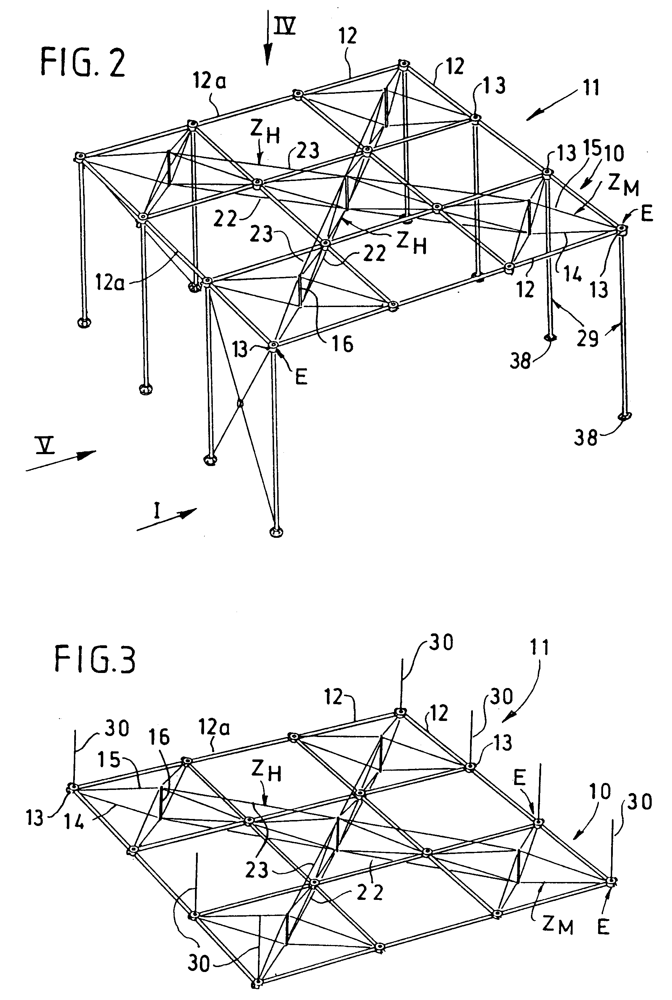

Wie im Zusammenhang der Fig. 2-5 zu ersehen, wirken die modulseitigen Zugmittelpaare Z_{M} jeweils in einer Vertikalebene in der Modul-Diagonalen, während die Hauptzugmittelpaare Z_{H} jeweils in einer Wirkungslinie bzw. in einer vertikalen Wirkungsebene mit den modulseitigen Zugmittelpaaren Z_{M} in der Hauptdiagonalen des Gesamtrasters 11 wirken und so dem Gesamtraster 11 durch dessen Vorspannung eine große Tragfähigkeit bei gleichzeitig großer freier Spannweite verleihen.

Der Deckenraster 11 kann gemäß Fig. 2 entweder auf Tragsäulen 29 aufgeständert oder mittels Tragseile 30 von einer höhergelegenen Gebäudedecke od.dgl. abgehängt werden.

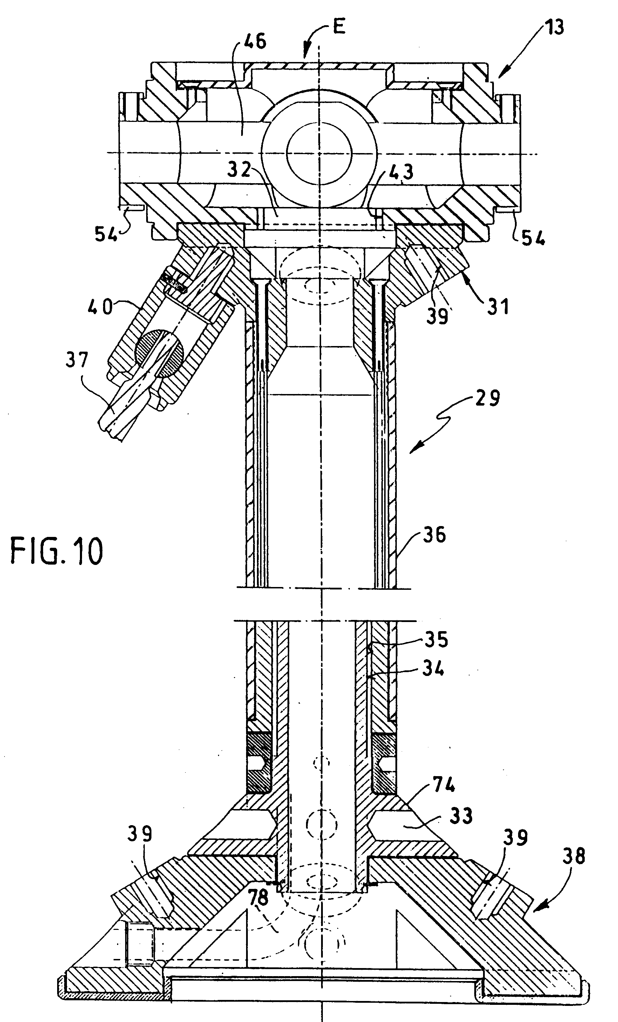

Zwecks Niveauausgleich ist jede Tragsäule 29 (Fig. 10) höhenverstellbar. Die Tragsäule 29 weist ein Kapitell 31 auf, welches oberseitig mit einem hohlen Gewindezapfen 32 versehen ist. Der Gewindezapfen 32 greift in eine bodenseitige Innengewindeaufnahme (Befestigungsstelle) 43 des Kupplungsstücks 13 ein. Es ist vorstellbar, daß die Innengewindeaufnahme 43 (im Bedarfsfalle nach oben gekehrt) auch zur Aufnahme eines schraubstopfenartigen Anschlagteils zur Befestigung eines Deckentragseils 30 verwendet werden kann.

Wie aus Fig. 10 außerdem zu ersehen, ist ein unteres Säulenteil 74, mit Verstecklöchern 33 versehen, auf einem Säulenfuß 38 um die Höhenachse y herum drehbar gelagert. Das untere Säulenteil 74 greift mit einem Außengewinde 34 in ein Innengewinde 35 eines oberen Säulenteils 36 ein, so daß durch Drehbetätigung des unteren Säulenteils 74 an den Verstecklöchern 33 eine Höhenveränderung der Tragsäule 29 herbeigeführt werden kann. Wie im Zusammenhang der Fig. 1-5 sowie 10 zu ersehen ist, können zwei benachbarte Tragsäulen 29 mittels einer Kreuzverspannung aus Zugseilen 37 miteinander verbunden sein. Zum Anschluß derartiger Zugseile 37 sind sowohl der Säulenfuß 38 als auch das Kapitell 31 mit Innengewindeaufnahmen 39 versehen, in welche Anschlagteile 40 (ähnlich ausgebildet wie die Anschlagteile 24 gemäß Fig. 9) mittels Gewindeeingriff befestigt sind. Die Zugseile 37 selbst können mittels nicht dargestellter üblicher Gewinde-Spannschlösser gespannt werden.

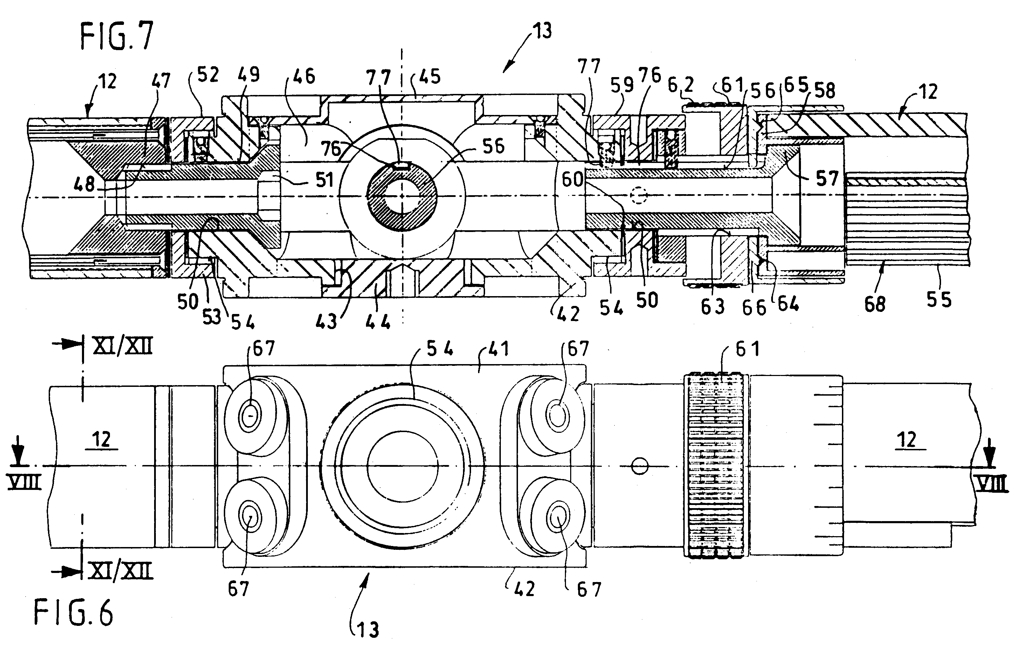

Aus den Fig. 6-8 wird deutlich, daß jedes Kupplungsstück 13 einen topfförmigen Hohlkörper bildet, dessen mit der Hohlkörperseitenwand 41 einstückiger Boden 42 zum Beispiel für den Außengewindezapfen 32 des tragsäulenseitigen Kapitells 31 die Innengewindeaufnahme 43 bildet. Gemäß Fig. 7 ist die Befestigungsaufnahme 43 aus optischen Gründen mittels eines Schraubstopfens 44 für den Fall verschlossen, daß das Kupplungsstück 13 an dieser Stelle nicht von einer Tragsäule 29 unterstützt ist.

Die der Befestigungsaufnahme 43 gegenüberliegende Seite des topfartigen Kupplungsstücks 13 ist offen, jedoch mittels eines Deckels 45 verschließbar. Der Hohlraum 46 innerhalb des topfförmigen Kupplungsstücks 13 dient der Aufnahme von elektrischen Verbindungs-, Steuer- oder Regelelementen.

Im Zusammenhang mit den Fig. 6 und 7 wird auch deutlich, wie die druckfeste Verbindung zwischen dem Kupplungsstück 13 und zwei benachbarten Hohlprofilstäben 12 bewerkstelligt ist. Zu den Hohlprofilstäben 12 ist grundsätzlich zu sagen, daß diese (links in den Fig. 6 und 7) einen geschlossenen Rohrquerschnitt oder aber überwiegend (rechts in den Fig. 6 und 7; Fig. 11 und 12) einen längsgeschlitzten Rohrquerschnitt aufweisen können. In jedem Falle ist die druckfeste Verbindung zwischen den Hohlprofilstäben 12 und den Kupplungsstücken 13 so ausgebildet, daß ein Kabeldurchtritt gewährleistet ist.

Links in Fig. 7 ist ein stopfenförmiger Einsatz 47 dargestellt, welcher endstirnseitig des Hohlprofilstabes 12 geschlossenen Rohrquerschnittes schraubbefestigt ist. Der stopfenförmige Einsatz 47 weist eine zentrale Innengewindeaufnahme 48 auf. Vom Hohlraum 46 her ist ein Außengewindehohlbolzen 49 durch eine kupplungsstückseitige Kabeldurchführung 50 hindurchgesteckt und greift sodann in die Innengewindeaufnahme 40 des stopfenförmigen Einsatzes 47 ein. Der Außengewindehohlbolzen 49 ist mittels eines Innensechskants 51 schraubbetätigbar. Außerdem trägt der Außengewindehohlbolzen 49 eine Überwurfmutter 52, welche mit ihrem Innengewindeflansch 53 das Außengewinde des kupplungsstückseitigen Außengewindeansatzes 54 übergreift.

Die rechts in den Fig. 6 und 7 dargestellte Kupplungsverbindung zwischen dem Hohlprofilstab 12 und dem Kupplungsstück 13 ist aufwendiger, da jener Hohlprofilstab 12 bei 55 einen Schlitz aufweist und deshalb um seine Stablängsachse drehorientierbar sein muß.

Hierzu ist zunächst ein anderer Außengewindehohlzapfen 56 mittels seines Kopfes 57 und einer Abschlußplatte 58 an der Endstirnseite des längsgeschlitzten Hohlprofilstabs 12 gehalten. Die Abschlußplatte 58 ist mittels nicht näher dargestellter Schrauben an der Stirnseite des Hohlprofilstabs 12 befestigt. Auf dem Umfang des Außengewindehohlzapfens 56 ist eine Überwurfmutter 59 frei drehbar aber axial gesichert angeordnet, welche mit dem Außengewindeansatz 54 des Kupplungsstücks 12 verschraubt ist. Die Axialsicherung der Überwurfmutter 59 auf dem Außengewindehohlzapfen 56 wird hierbei mittels eines radial vorstehenden Sperringes 60 (z.B. Seeger-Sicherungsring) durchgeführt.

Zu seiner Drehsicherung weist der Gewindezapfen mantelseitig außen eine axiale Längsnut 76 auf, in welche eine den Außengewindeansatz 54 des Kupplungsstückes 13 radial von außen her durchsetzende Stiftschraube eingreift.

Der Außengewindehohlzapfen 56 trägt außerdem eine zusätzliche Überwurfmutter 61, welche jedoch an ihrem Flansch 62 gewindelos ausgebildet ist und lediglich zentral ein Innengewinde 63 aufweist, welches mit dem Außengewinde des Außengewindehohlzapfens 56 zusammenwirkt.

Die radiale Stirnseite der Abschlußplatte 58 ist mit über den Umfang verteilten Rastlöchern 64 versehen, in welche korrespondierende Rastvorsprünge 65 einer Rastscheibe 66 eingreifen können. Der Rasteingriff wird durch Anziehen der Überwurfmutter 61 nach rechts gemäß Fig. 7 bewerkstelligt, während ein Losschrauben der Überwurfmutter 61 nach links eine Lösung der Rastverbindung 64, 65 und zugleich auch ein Lösen des Kopfes 57 des Außengewindehohlzapfens 56 - und damit eine Drehorientierung des Hohlprofilstabes 12 um seine Längsachse - ermöglicht.

Aus Fig. 7 geht hervor, daß auch von dem rechts in Fig. 7 dargestellten Hohlprofilstab 12 eine Kabeleinspeisung durch den Außengewindehohlzapfen 56 hindurch in den Hohlraum 46 des Kupplungsstücks 13 hinein möglich ist.

Im übrigen weist jedes Kupplungsstück 13 an seiner einbaubedingt vertikalen Seitenwand 41 jeweils zwei Befestigungsaufnahmen (Außengewindeansatz 54) zur endseitigen Befestigung zweier benachbarter Hohlprofilstäbe 12 und außerdem zusätzliche Befestigungsaufnahmen 54 zur Anbindung mit Hohlprofilstäbe 12 an ein Nachbarmodul sowie schließlich Zugmittel-Befestigungsaufnahmen (Innengewindeaufnahmen 67) auf.

Die Außengewindeansätze 54 sind bei dem topfförmigen Kupplungsstück im Umfangswinkelabstand von 90° angeordnet. Jeweils mittig zwischen diesen Außengewindeansätzen 54 sind axial übereinander die Zugmittel-Befestigungsaufnahmen 67 (Innengewindeaufnahmen) für die Zugmittelstäbe 14 und 15 angeordnet.

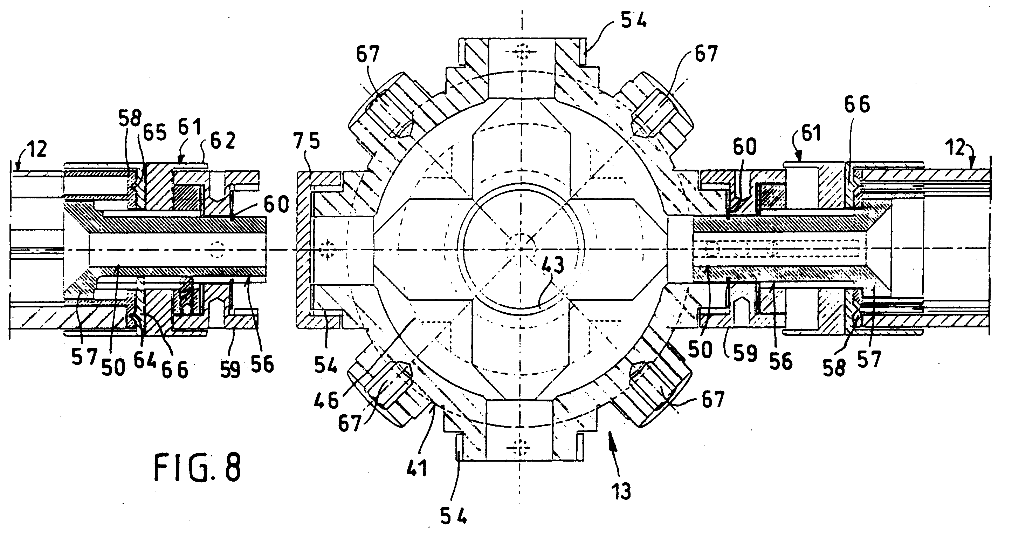

Fig. 8 stellt insoweit einen Unterschied gegenüber den Fig. 6 und 7 dar, als sowohl rechts und auch links ein längsgeschlitzter Hohlprofilstab 12 mit der Rastanordnung 64, 65 dargestellt ist. Links in Fig. 8 ist das Teil 12 mitsamt den zugehörigen Kupplungsmitteln axial nach links abgezogen. Anstelle der Überwurfmutter 59 ist ein Flanschdeckel 75 mit dem Außengewindeansatz 54 des Kupplungsstückes 13 verschraubt.

Anhand von Fig. 10 soll außerdem noch nachgetragen werden, daß, wie dort aus der Zeichnung ersichtlich, die elektrische Einspeisung mittels eines Elektrokabels 78 durch den Säulenfuß 38 über einen Axialhohlraum der Tragsäule 29 durch den Gewindezapfen 32 (der hohl ausgebildet ist) des Kapitells 31 in den Hohlraum 46 des Kupplungsstücks 13 hinein erfolgt.

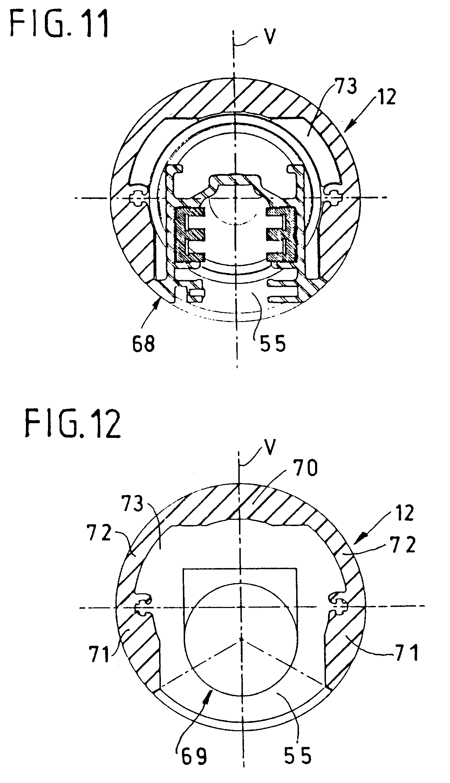

Den Fig. 11 und 12 ist zu entnehmen, daß jeder als Schlitzrohr ausgebildete Hohlprofilstab 12 in bekannter Weise einen Aufnahmeraum für eine Stromschiene 68 (Fig. 11) oder für ein oder mehrere Leuchtmittel, beispielsweise für eine Leuchtstoffröhre 69 (Fig. 12), bilden kann. Die elektrische Ein- und Ausspeisung der Stromschiene 68 erfolgt über bekannte Adapter (s. z.B. DE-OS 29 15 502).

Der hinsichtlich seiner Außenkontur kreisförmige Hohlprofilstab-Querschnitt gemäß den Fig. 11 und 12 ist besonders gestaltet. Beiderseits einer einbaubedingt mittig durch den Längsschlitz 55 verlaufenden Vertikalebene V ist der Hohlprofilstab-Querschnitt spiegelsymmetrisch in unterschiedliche dicke Wandbereiche aufgegliedert.

Hierbei weisen jeweils der Scheitelbereich 70 und die beiden freien Profilendbereiche 71 eine relativ große Querschnittsdicke auf. Der Scheitelbereich 70 und die beiden Profilendbereiche 71 sind jeweils über einen relativ dünnen Querschnittsbereich 72 miteinander verbunden. Auf diese Weise ist es möglich geworden, auch bei einem längsgeschlitzten Hohlprofilstab 12 einen relativ großen Widerstand gegen Durchbiegung bzw. Knickung entlang seiner Stablängsachse zu erzielen, da der relativ dicke Scheitelbereich 70 als Druckgurt und die ebenfalls relativ dicken freien Profilendbereiche 71 als Zuggurte wirken können. Durch die relativ dünnen Querschnittsbereiche 72 werden im Profilhohlraum zudem zusätzliche hinterschnittene Kabelkanäle 73 geschaffen.

Im Zusammenhang mit der Gesamtbeschreibung wird deutlich, daß die gezeigten Deckenraster 11 mechanisch zunächst komplett vormontiert werden können, worauf anschließend die Elektroinstallation durchgeführt werden kann.

## Patentansprüche

1. Leuchtenträger-Anordnung mit mindestens einem Leuchtenträger-Modul, welches dem Anschluß von Leuchten oder Leuchtmitteln dienende langgestreckte Hohlprofilstäbe aufweist, deren Enden mittels gegebenenfalls zur Aufnahme elektrischer Verbindungselemente od. dgl. bestimmter Kupplungsstücke eingespannt und aneinandergehalten sind, welche zugleich Befestigungsstellen für die Anordnung des Moduls im Raum bilden, wobei die Hohlprofilstäbe eines jeden Moduls in einer gemeinsamen horizontalen Einbauebene ein geschlossenes Polygon mit je einem in sich starren Kupplungsstück an jeder Polygonecke darstellen, und wobei die horizontale Einbauebene mittig und orthogonal von einer Spreize (16) durchsetzt ist, die jeweils zwei Zugmittel (14, 15) eines Zugmittelpaares (Z_{M}), welche jeweils zwei Kupplungsstücke (13) quer über das Modul (10) hinweg miteinander verbinden, in einer gemeinsamen Vertikalebene voneinander distanziert und gegeneinander verspannt, dadurch gekennzeichnet, daß jedes Modul (10) vier gleichlange Hohlprofilstäbe (12) aufweist, die ein Quadrat mit je einem Kupplungsstück (13) an jeder Quadratecke (E) darstellen, daß die Hohlprofilstäbe (12) mit ihren Enden in Befestigungsaufnahmen von starren Kupplungsstücken (13) gehaltene Druckstäbe bilden, daß die Spreize (16) mittels einer Schraubbetätigung zur Vorspannungsänderung des Moduls (10) längenveränderbar ist, daß jedes Kupplungsstück (13) als topfförmiger Hohlkörper ausgebildet ist und an seiner einbaubedingt vertikalen Seitenwand (41) zwei Befestigungsaufnahmen (54) zur endseitigen Befestigung zweier benachbarter Hohlprofilstäbe (12), außerdem zusätzliche Befestigungsaufnahmen (54) zur Anbindung an ein Nachbarmodul (10) sowie Zugmittel-Befestigungsaufnahmen (67) aufweist und daß die kupplungsstückseitigen Befestigungsaufnahmen für die Hohlprofilstäbe (12) jeweils einen eine Kabeldurchführung (50) umschließenden Außengewindeansatz (54) bilden, welcher sich im Eingriff mit einer hohlprofilseitig gehaltenen Überwurfmutter (59) befindet.

2. Leuchtenträger-Anordnung nach Anspruch 1, dadurch gekennzeichnet, daß die Zugmittel aus endseitig der Spreize (16) gehaltenen Zugstäben (14, 15) bestehen.

3. Leuchtenträger-Anordnung nach Anspruch 1 oder 2, dadurch gekennzeichnet, daß die Zugmittel (14, 15) zur Erzielung einer Vorspannung des Moduls (10) mittels Spannschlösser längenveränderbar sind.

4. Leuchtenträger-Anordnung nach einem der Ansprüche 1 bis 3, dadurch gekennzeichnet, daß die Hohlprofilstäbe (12) längsgeschlitzt sind.

5. Leuchtenträger-Anordnung nach einem der Ansprüche 1 bis 4, dadurch gekennzeichnet, daß das topfförmige Kupplungsstück (13) eine im wesentlichen kreiszylindermantelförmige Seitenwand (41) aufweist, die jeweils im Umfangswinkelabstand von 90° vier Befestigungsaufnahmen (54) für die Hohlprofilstäbe (12) und - jeweils mittig zwischen diesen Befestigungsaufnahmen (54) - zwei axial übereinander angeordnete Zugmittel-Befestigungsaufnahmen (67) aufweist.

6. Leuchtenträger-Anordnung nach einem der Ansprüche 1 bis 5, dadurch gekennzeichnet, daß jedes Kupplungsstück (13) auf einer Tragsäule (20) befestigbar oder an einem Tragseil (30) bzw. an einem Tragpendelstab abhängbar ist und hierzu eine Befestigungsstelle, z.B. eine Innengewindeaufnahme (43), aufweist, welche nach Wenden des Kupplungsstückes (13) wahlweise zur Befestigung auf der Tragsäule (29) oder zur endseitigen Befestigung am Tragseil (30) bzw. am Tragpendelstab dienen kann.

7. Leuchtenträger-Anordnung nach einem der Ansprüche 1 bis 6, dadurch gekennzeichnet, daß ein mit einer Hohlkörperseitenwand (41) einstückiger Boden (42) des Kupplungsstücks (13) die Befestigungs-Innengewindeaufnanme (43) bildet, während die gegenüberliegende offene Seite mittels eines Deckels (45) verschließbar ist.

8. Leuchtenträger-Anordnung nach einem der Ansprüche 1 bis 7, dadurch gekennzeichnet, daß mehrere ein Gesamtraster (11) bildende Module (10) eckseitig (bei E) aneinander befestigt sind, derart, daß die Eckverbindung zwischen jeweils zwei benachbarten Modulen (10) ein gemeinsames Kupplungsstück (13) ist.

9. Leuchtenträger-Anordnung nach Anspruch 8, dadurch gekennzeichnet, daß zur Herstellung eines Gesamtrasters (11) durch Verbindung mehrerer miteinander in einer Geraden fluchtender Modulecken (E) mindestens ein zusätzliches Zugmittelpaar - Hauptzugmittelpaar (Z_{H})- vorgesehen ist, dessen beide Hauptzugmittel (23, 22) sich einbaubedingt in einer Vertikalebene befinden und jeweils oberhalb bzw. unterhalb der modulseitigen Zugmittel (15, 14) am oberen bzw. am unteren Ende einer jeden Spreize (16) befestigt sind.

10. Leuchtenträger-Anordnung nach einem der Ansprüche 1 bis 9, dadurch gekennzeichnet, daß endseitig im Hohlprofilstab (12) jeweils ein Gewindehohlzapfen (56) gehalten ist, der die auf ihm axial gesicherte (bei 60) Überwurfmutter (59) frei drehbar trägt und mit seinem freien Ende in die Kabeldurchführungsöffnung (50) der Befestigungsaufnahme (54) des Kupplungsstücks (13) eingreift.

11. Leuchtenträger-Anordnung nach Anspruch 10, dadurch gekennzeichnet, daß der auf ganzer axialer Länge eine Kabeldurchstecköffnung bildende Gewindehohlzapfen (56) einen Befestigungskopf (57) zur endseitigen Aufnahme innerhalb des Hohlprofilstabes (12) aufweist und dort mittels einer außenstirnseitig befestigten Abschlußplatte (58) gehalten ist.

12. Leuchtenträger-Anordnung nach Anspruch 11, dadurch gekennzeichnet, daß auf dem gewindehohlzapfenseitigen Außengewindeabschnitt zwischen Überwurfmutter (50) und Abschlußplatte (58) eine zusätzliche Überwurfmutter (61) angeordnet ist, welche den Kopf des Gewindehohlzapfens (56) gegen die Innenseite der Abschlußplatte (58) zieht.

13. Leuchtenträger-Anordnung nach Anspruch 12, dadurch gekennzeichnet, daß zwischen der zusätzlichen Überwurfmutter (61) und der Abschlußplatte (58) ein mit relativ feiner Umfangsteilung versehens, eine aufhebbare Rastverbindung (64, 65) bewirkendes Rastbauteil (66) angeordnet ist.

14. Leuchtenträger-Anordnung nach einem der Ansprüche 1 bis 13, dadurch gekennzeichnet, daß jede an ihrem freien Ende ein modulseitiges Kupplungsstück (13) tragende Tragsäule (29) höhenverstellbar ist.

15. Leuchtenträger-Anordnung nach Anspruch 14, dadurch gekennzeichnet, daß zwei benachbarte Tragsäulen (29) mittels einer einbaubedingt in einer Vertikalebene angeordneten Zugmittel-Kreuzverspannung (bei 37) miteinander verbunden sind.

16. Leuchtenträger-Anordnung nach Anspruch 14 oder nach Anspruch 15, dadurch gekennzeichnet, daß die elektrische Kabeleinspeisung der Module (10) durch die hohlen Tragsäulen (29) und von dort aus über die bodenseitige Befestigungsstelle (Innengewindeaufnahme 43) des Kupplungsstücks (13) in dessen Hohlraum (46) hinein erfolgt.

17. Leuchtenträger-Anordnung nach einem der Ansprüche 1 bis 16, dadurch gekennzeichnet, daß jeder als Schlitzrohr ausgebildete Hohlprofilstab (12) in bekannter Weise einen Aufnahmeraum für eine Stromschiene (68) oder für ein oder mehrere Leuchtmittel, beispielsweise für eine Leuchtstoffröhre (69), bildet.

18. Leuchtenträger-Anordnung nach Anspruch 17, dadurch gekennzeichnet, daß der Hohlprofilstab-Querschnitt beiderseits einer einbaubedingt mittig durch den Längsschlitz (55) verlaufenden Vertikalebene (V) spiegelsymmetrisch in unterschiedlich dicke Wandbereiche (70; 71, 71) aufgegliedert ist, derart, daß der Scheitelbereich (70) des Querschnittes und die beiden freien Profilendbereiche (71) Zonen größerer Querschnittsdicken bilden, wobei der Scheitelbereich (70) und die beiden Profilendbereiche (71) über jeweils einen dünneren Querschnittsbereich (72) miteinander verbunden sind.

## Claims

1. Light carrier arrangement, having at least one light carrier module comprising elongated hollow section bars, which are used to connect lights or means of illumination and whose ends are clamped and held attached to one another with the aid of coupling pieces, which are possibly intended to receive electrical connection elements or the like and simultaneously form fastening points for the arrangement of the module in the room, the hollow section bars of each module in a common horizontal installation plane describing a closed polygon having one intrinsically rigid coupling piece at each corner of the polygon, and the horizontal installation plane being penetrated centrally and orthogonally by a stretcher (16) by means of which in each case two tension means (14, 15) of a tension means pair (Z_{M}), which in each case connect two coupling pieces (13) to one another diagonally across the module (10), are distanced from one another in a common vertical plane and braced against one another, characterized in that each module (10) has four hollow section bars (12) of equal length describing a square having one coupling piece (13) at each corner (E) of the square, that the hollow section bars (12) form compression bars held by their ends in fastening receivers of rigid coupling pieces (13), that the stretcher (16) is variable in length with the aid of a screw control for altering the initial tension of the module (10), that each coupling piece (13) takes the form of a pot-shaped hollow body and has at its, after installation, vertical side wall (41) two fastening receivers (54) for fastening the ends of two adjacent hollow section bars (12), plus additional fastening receivers (54) for connection to an adjacent module (10) as well as tension-means fastening receivers (67), and that the fastening receivers on the coupling piece side for the hollow section bars (12) each form an externally threaded projection (54), which encloses a cable gland (50) and is in engagement with a union nut (59) held on the hollow section side.

2. Light carrier arrangement according to claim 1, characterized in that the tension means comprise tension rods (14, 15) held by the ends of the stretcher (16).

3. Light carrier arrangement according to claim 1 or 2, characterized in that the tension means (14, 15) are variable in length with the aid of turnbuckles in order to achieve an initial tension of the module (10).

4. Light carrier arrangement according to one of claims 1 to 3, characterized in that the hollow section bars (12) are longitudinally slit.

5. Light carrier arrangement according to one of claims 1 to 4, characterized in that the pot-shaped coupling piece (13) has a side wall (41), which is substantially in the shape of the lateral surface of a circular cylinder and has, at intervals of 90° around its periphery, four fastening receivers (54) for the hollow section bars (12) and - in each case centrally between said fastening receivers (54) - two tension-means fastening receivers (67) disposed axially one above the other.

6. Light carrier arrangement according to one of claims 1 to 5, characterized in that each coupling piece (13) may be fastened on a supporting column (20) or may be suspended on a carrying cable (30) or a pendant carrying rod and for said purpose has a fastening point, e.g. an internally threaded receiver (43), which after turning of the coupling piece (13) may be used selectively for fastening on the supporting column (29) or for fastening to the end of the carrying cable (30) or the pendant carrying rod.

7. Light carrier arrangement according to one of claims 1 to 6, characterized in that a base (42) of the coupling piece (13), which base is an integral part of a hollow body side wall (41), forms the internally threaded fastening receiver (43), while the opposite open side is closable by means of a cover (45).

8. Light carrier arrangement according to one of claims 1 to 7, characterized in that a plurality of modules (10) forming a total grid are fastened to one another at their corners (at E) in such a way that the corner connection between each two adjacent modules (10) is a common coupling piece (13).

9. Light carrier arrangement according to claim 8, characterized in that, in order to produce a total grid (11) by connecting a plurality of module corners (E) aligned in a straight line, at least one additional tension means pair - main tension means pair (Z_{H}) - is provided, the two main tension means (23, 22) of which are situated after installation in a vertical plane and are fastened above and below the module-side tension means (15, 14) to the top and bottom ends of each stretcher (16) respectively.

10. Light carrier arrangement according to one of claims 1 to 9, characterized in that held in the end of each hollow section bar (12) is a threaded hollow stem (56) which carries the union nut (59), axially secured thereon (at 60), in a freely rotatable manner and engages with its free end into the cable gland opening (50) of the fastening receiver (54) of the coupling piece (13).

11. Light carrier arrangement according to claim 10, characterized in that the threaded hollow stem (56), which along its entire axial length forms a cable gland opening, has a fastening head (57) for accommodation inside the end of the hollow section bar (12) and is held there by means of a closure plate (58) fastened to the outer end face.

12. Light carrier arrangement according to claim 11, characterized in that disposed on the externally threaded portion, on the threaded hollow stem side, between union nut (50) and closure plate (58) is an additional union nut (61), which draws the head of the threaded hollow stem (56) towards the inside of the closure plate (58).

13. Light carrier arrangement according to claim 12, characterized in that disposed between the additional union nut (61) and the closure plate (58) is a detent component (66) provided with a relatively fine circular pitch and effecting a cancellable lock-in connection (64, 65).

14. Light carrier arrangement according to one of claims 1 to 13, characterized in that each supporting column (29) carrying on its free end a module-side coupling piece (13) is height-adjustable.

15. Light carrier arrangement according to claim 14, characterized in that two adjacent supporting columns (29) are connected to one another with the aid of a tension-means diagonal bracing (at 37) which is disposed after installation in a vertical plane.

16. Light carrier arrangement according to claim 14 or according to claim 15, characterized in that the electric cable feeding of the modules (10) is effected through the hollow supporting columns (29) and from there via the floor-side fastening point (internally threaded receiver 43) of the coupling piece (13) into the latter's cavity (46).

17. Light carrier arrangement according to one of claims 1 to 16, characterized in that each hollow section bar (12) in the form of an open seam tube forms in a known manner a receiving area for a supply track system (68) or for one or more means of illumination, e.g. for a fluorescent tube (69).

18. Light carrier arrangement according to claim 17, characterized in that the hollow section bar cross-section is mirror-symmetrically subdivided into wall regions (70; 71, 71) of differing thickness on either side of a vertical plane (V) extending after installation centrally through the longitudinal slot (55), such that the crown region (70) of the cross-section and the two free section end regions (71) form zones of greater cross-sectional thicknesses, the crown region (70) and the two section end regions (71) being connected to one another by in each case a thinner cross-sectional region (72).

## Revendications

1. Agencement de luminaire, comportant au moins un module support de luminaire, présentant des barres profilées creuses allongées, servant au raccordement de luminaires ou de moyens d'éclairage et dont les extrémités sont enserrées et fixées les unes aux autres, au moyen de pièces de couplage conçues le cas échéant pour recevoir des éléments de liaison électriques ou analogues, et forment en même temps des points de fixation pour le montage du module dans l'espace, les barres profilées creuses de chaque module constituant dans un plan de montage horizontal commun un polygone fermé, ayant chaque fois une pièce de couplage, rigide en soi, à chaque angle de polygone, et le plan de montage étant traversé, centralement et perpendiculairement, par un contreventement (16), les deux moyens de traction (14, 15), chaque fois formés, d'un couple de moyens de traction (Z_{M}), reliant ensemble chaque fois deux pièces de couplage (13) dans la diagonale du module (10), étant espacés l'un de l'autre dans un plan vertical commun et tendus l'un par rapport à l'autre,
caractérisé en ce que chaque module (10) présente quatre barres profilées creuses (12) de même longueur, constituant un carré ayant chacun une pièce de couplage (13) à chaque angle de carré (E), en ce que les barres profilées creuses (12) forment avec leurs extrémités des barres de compression maintenus dans des logements de fixation de pièces de couplage (13) rigides, en ce que le contreventement (16) est d'une longueur pouvant être modifiée, au moyen d'un actionnement par vissage, en vue de modifier la précontrainte du module (10), en ce que chaque pièce de couplage (13) est réalisée sous forme de corps creux en forme de pot et présente, sur sa paroi latérale (41) placée verticalement pour les besoin du montage, deux logements de fixation (54) destinés à fixer aux extrémités deux barres profilées creuses (12) voisines, ainsi qu'en outre des logements de fixation (54) supplémentaires destinés au montage avec un module voisin (10), ainsi des logements de fixation de moyens de traction (67), et en ce que les logements de fixation situés du côté des pièces de couplage et destinés aux barres profilées creuses (12) forment chacun un appendice à filetage mâle (54), entourant un passage de câble (50) et se trouvant en prise avec un écrou raccord (59) maintenu du côté du profilé creux.

2. Agencement de luminaire selon la revendication 1,
caractérisé en ce que les moyens de traction sont composés de barres de traction (14, 15) fixées à l'extrémité du contreventement (16).

3. Agencement de luminaire selon la revendication 1 ou 2,
caractérisé en ce que la longueur des moyens de traction (14, 15) peut être modifiée, au moyen de ridoirs, en vue d'obtenir une précontrainte du module (10).

4. Agencement de luminaire selon l'une des revendications 1 à 3,
caractérisé en ce que les barres profilées creuses (12) sont fendues longitudinalement.

5. Agencement de luminaire selon l'une des revendications 1 à 4,
caractérisé en ce que la pièce de couplage (13) en forme de pot présente une paroi latérale (41) sensiblement en forme d'enveloppe cylindrique, présentant chaque fois, avec un espacement angulaire périphérique de 90°, quatre logements de fixation (54) destinés aux barres profilées creuses (12) et - chaque fois au centre entre ces logements de fixation (54) - deux logements de fixation de moyens de traction (67) disposés axialement l'un au-dessus de l'autre.

6. Agencement de luminaire selon l'une des revendications 1 à 5,
caractérisé en ce que chaque pièce de couplage (13) est susceptible d'être fixée à une colonne support (20) ou accrochée à un câble support (30) ou à une barre support pour montage pendulaire et présente à cette fin un point de fixation, par exemple un logement taraudé (43), pouvant servir, après retournement de la pièce de couplage (13), au choix, à la fixation sur la colonne support (29) ou à la fixation côté extrémité, sur le câble support (30) ou sur la barre support pour montage pendulaire.

7. Agencement de luminaire selon l'une des revendications 1 à 6,
caractérisé en ce qu'un fond (42), réalisé d'un seul tenant avec une paroi latérale (41) de corps creux, de la pièce de couplage (13) forme le logement taraudé de fixation (43), tandis que le côté ouvert opposé peut être obturé au moyen d'un couvercle (45).

8. Agencement de luminaire selon l'une des revendications 1 à 7,
caractérisé en ce que plusieurs modules (10), formant une trame générale (11) sont fixés les uns aux autres, côté angle (en E), de telle façon que la liaison d'angle entre chaque fois deux modules (10) voisins soit constituée par une pièce de couplage (13) commune.

9. Agencement de luminaire selon la revendication 8,
caractérisé en ce que, pour constituer une trame générale (11), par liaison de plusieurs angles de modules (E) alignés les uns par rapport aux autres en suivant une droite, est prévu un couple de moyens de traction - couple de moyen de traction principal (Z_{H}) - supplémentaire, dont les deux moyens de traction principaux (23, 22) se trouvent dans un plan vertical pour les besoins de la construction et sont chaque fois fixés au-dessus, respectivement au-dessous du moyen de traction (15, 14) situé côté module, à l'extrémité supérieure, respectivement à l'extrémité inférieure de chaque contreventement (16).

10. Agencement de luminaire selon l'une des revendications 1 à 9,
caractérisé en ce qu'à l'extrémité et à l'intérieur de chaque barre profilée creuses(12) est chaque fois fixé un tourillon creux fileté (56), portant, tournant librement, un écrou-raccord (59) fixé sur lui axialement (en 60), et s'engageant, par son extrémité libre, dans l'ouverture de passage de câble (50) du logement de fixation (54) de la pièce de couplage (13).

11. Agencement de luminaire selon la revendication 10,
caractérisé en ce que le tourillon creux fileté (56), formant sur toute sa longueur une ouverture de passage de câble, présente une tête de fixation (57) qui est destinée a se loger à l'extrémité à l'intérieur de la barre profilée creuse (12) et y est maintenue au moyen d'une plaque de délimitation (58) fixée frontalement et extérieurement.

12. Agencement de luminaire selon la revendication 11,
caractérisé en ce qu'un écrou raccord (61) supplémentaire, tirant la tête du tourillon creux fileté (56) contre la face intérieure de la plaque de délimitation (58), est disposé sur le tronçon à filetage mâle, situé côté tourillon creux fileté, entre l'écrou-raccord (50) et la plaque de délimitation (58).

13. Agencement de luminaire selon la revendication 12,
caractérisé en ce qu'un élément de construction à encliquetage (66), provoquant une liaison d'encliquetage (64, 65) pouvant être supprimée, pourvu d'une division périphérique relativement fine, est disposé entre l'écrou-raccord (61) supplémentaire et la plaque de délimitation (58).

14. Agencement de luminaire selon l'une des revendications 1 à 13,
caractérisé en ce que chaque colonne-support (29), portant à son extrémité libre une pièce de couplage (13) située côté module, est réglable en hauteur.

15. Agencement de luminaire selon la revendication 14,
caractérisé en ce que deux colonnes support voisines (29) sont reliées ensemble (en 37) au moyen d'un haubanage croisé à moyens de traction, disposés dans un plan vertical pour les besoins du montage.

16. Agencement de luminaire selon la revendication 14,
caractérisé en ce que l'alimentation électrique par câbles du module (10) aa lieu à travers les colonnes support (29) creuses et, de là, par le point de fixation, côté fond (logement taraudé 43) de la pièce de couplage (13), dans son espace creux (46).

17. Agencement de luminaire selon l'une des revendications 1 à 16,
caractérisé en ce que chaque barre profilée creuse (12), réalisée sous forme de tube fendu, forme, de manière connue, une enceinte de réception pour un rail électrique (68) ou pour un ou plusieurs moyens d'éclairage, par exemple pour un tube luminescent (69).

18. Agencement de luminaire selon la revendication 17,
caractérisé en ce que la section transversale des barres profilées est articulée, des deux côtés d'un plan vertical (V), s'étendant, pour les besoins du montage, au centre et à travers la fente longitudinale (55), en répondant à une symétrie spéculaire, en donnant des zones de paroi (70; 71, 71) d'épaisseurs différentes, de telle façon que la zone de sommet (70) de la section transversale et les deux zones d'extrémité (71) libres du profilé forment des épaisseurs de section transversale plus fortes, la zone de sommet (70) et les deux zones d'extrémité (71) de profilé étant reliées ensemble chaque fois par l'intermédiaire d'une zone de section transversale (72) plus mince.
